# EUROPEAN PATENT SPECIFICATION

(11) **EP 0 670 765 B1**
(45) Date of publication and mention of the grant of the patent: **12.08.1998**
(21) Application number: 93913963.0
(22) Date of filing: 14.05.1993
(51) Int. Cl.: B29B 13/02, B65B 63/08

(54) **METHOD FOR TACKLESS PACKAGING OF HOT MELT ADHESIVES**
VERFAHREN ZUR VERPACKUNG SCHMELZBAREN KLEBSTOFFEN
PROCEDE D'EMBALLAGE SANS COLLE D'ADHESIFS FONDANTS A CHAUD

(30) Priority: 09.12.1992 US 990345; 23.12.1992 US 993890
(43) Date of publication of application: 13.09.1995
(73) Proprietor: National Starch and Chemical Investment Holding Corporation, Wilmington, Delaware 19809 (US)
(72) Inventor: HATFIELD, Stephen, Somerville, NJ 08876 (US); GORE, Shelley, Neshanic Station, NJ 08853 (US); FAME, David, Newtown, PA 18940 (US); RINDONE, Anthony, Flemington, NJ 08822 (US)
(74) Representative: Hagemann, Heinrich, Dr.rer.nat., Dipl.-Chem.
(86) International application number: US9304705
(87) International publication number: WO9413451

(56) References cited:
- EP-A- 0 017 394
- EP-A- 0 469 564
- DE-A- 3 234 065
- DE-C- 3 138 222
- FR-A- 2 544 654
- FR-A- 2 603 021
- GB-A- 2 156 302
- US-A- 3 564 808

## Description

This invention relates to a method for packaging hot melt adhesives compositions and to the resulting packaged adhesive compositions.

Hot melt adhesives which are generally applied while in the molten or liquid state are solid at room temperature. Typically, these adhesives are provided in the form of blocks and because of the nature of these materials, particularly the pressure sensitive hot melts, there are problems associated with handling and packaging them. The solid adhesive blocks not only stick or adhere to hands or mechanical handling devices and to each other, but they also pick up dirt and other contaminants. Additionally, certain applications which require high tack formulations result in blocks that will deform or cold flow unless supported during shipment. The need and advantages for providing tackless or non-blocking hot melt adhesives are apparent and various ways of accomplishing this have been developed.

US-A-3,987,602 discloses a method for packaging bitumen in flexible synthetic foil containers. According to that method it is necessary to fill-in air under pressure before the bitumen is introduced into the flexible synthetic foil. That means that the filling of the bitumen has to be interrupted in times so that said method is not fully continuous. It is neither required that the bitumen and the synthetic foil are blendable nor that they are meltable together.

US-A-3,564,808 and FR-A-2,603,021 are both directed to methods for packaging molten materials such as asphalt, wax or paraffin in plastic bags. US-A-3,564,808 discloses a batch process according to which asphalt is poured in a polyethylene bag at a temperature below the melting point of the polyethylene. According to FR-A-2 603 021 the filling of the asphalt into a polyethylene bag takes place above the melting point of the polyethylene. The method according to FR-A-2 603 021 is as well a batch process which requires further air to be incorporated. Neither US-A-3,564,808 nor FR-A-2 603 021 requires that the asphalt and the polyethylene bag or other film material are blendable nor that they are meltable together.

Japanese Patent 48-103635 discloses a granular adhesive which is tacky at room temperature and coated or enveloped with a non-tacky hot meltable material that is the same type or is miscible or mixable with it.

FR-A-2,544,654 discloses forming a tackless hot melt by adding molten hot melt to a mold containing a preformed support layer having a transfer film thereon which is compatible with the hot melt.

US-A-4,748,795 and US-A-4,755,245 disclose forming a protective coating for an adhesive material by electrostatically coating a mold or cavity with a powder screen and then pouring hot melt into the mold.

FR-A-2,601,616 discloses forming blocks of hot melt pressure sensitive adhesives by casting the pressure sensitive adhesive into molds precoated by spraying with a film of non self-sticking hot melt material thereby forming a fusible non-tacky veil around the pressure sensitive block.

In German Patent DE 22 48 046 the hot melt adhesive is squeeze-cut into pillow-shaped pieces; the pieces subsequently cooled and solidified.

Still other patents teach coating or wrapping the formed hot melt block with various types of plastic films. Thus, German patents DE 31 38 222 and 32 34 065 disclose coating the circumference of elongated hot melt portions with a thin polyolefin film. German patent 36 25 358 teaches wrapping the solid hot melt block in a thermoplastic, especially copolyamide film with a melting point of 120°C to 150°C, which EP-A-0 469 564 discloses wrapping the solidified hot melt in a plastic packaging material.

All the later methods have provided some degree of improvement in the packaging and handling of hot melt adhesives however they have suffered by virtue of either the need to unwrap or otherwise unpackage the hot melt or, in the cases of coated hot melts which are added directly to the melting pots, by virtue of the contamination resulting from the build up over time of large quantities of the packaging materials in the melt pot and applications equipment.

In order to overcome the disadvantages inherent in the methods of the prior art, U.S. Patent Application Serial No. 07/883,994 filed May 18, 1992, assigned to National Starch and Chemical Investment Holding Corporation, discloses the finding that when the hot melt adhesive is poured in its molten state into a mold or cavity lined with plastic packaging film and then allowed to solidify, the adhesive is fused to some extent into the film, resulting in a non-blocking adhesive package which will melt faster in the melt pot and will not cause a build up of undesirable plastics residue even after extended periods of time. Thus, the intermolecular transfer of one or more of the hot melt components into the contact surface of the plastic film allows some mixing or compatibilizing of the film and the hot melt thereby improving the opportunity for more complete mixing of the hot melt and film when remelting of the packaged hot melt occurs. The method provides an additional benefit over prior non-blocking packages in that the package itself is air-tight allowing no air to be entrapped therein. The presence of entrapped air in prior package has been blamed for a variety of problems including incomplete melting and blending of the packaging material into the adhesive whereby the packaging material floats on the surface of the hot melt and/or adheres to the walls of the melt pot.

Since the melting point of the plastic film should be comparable to, and preferably lower than, the melting point of the hot melt adhesive in order to provide for satisfactory melting in the melt pot which does not have a source of agitation, it is necessary that the lined mold be a heat sink or be in contact with a heat sink so as to remove excess heat from the film as quickly as possible and thereby prevent melting, burning or charring of the plastic film wrap.

Thus, the prior application was directed to a method for packaging hot melt adhesives comprising the steps of:
a. lining a mold with a plastic film, said film being meltable together with the adhesive composition and blendable into said molten adhesive composition, and said mold being in contact with a heat sink;
b. pouring the molten hot melt adhesive into the lined mold; and
c. allowing the molten hot melt adhesive to solidify.

In accordance with a preferred embodiment of that method, we have now found that the molten adhesive may be directly and continuously pumped or poured into a cylindrical plastic tube, the cylindrical tube being in contact with a heat sink. The resultant adhesive package is thus provided in a readily handable cartridge form which may be produced in a continuous line operation and which additionally possesses all the advantages of the easily processable non-blocking adhesive package of the parent application.

Thus, the present invention is directed to a method for the continuous packaging of hot melt adhesive compositions comprising the steps of
a) continuously pumping or pouring molten hot melt adhesive in liquid form into a cylindrical plastic tube of plastic film, the cylindrical tube being in direct contact with cooled water or a cooled liquid or gaseous environment, the adhesive being poured or pumped at a temperature at or above the melting point of the plastic film and the plastic film being meltable together with the adhesive composition and blendable into said molten adhesive without deleteriously affecting the properties of the adhesive;
b) sealing the molten hot melt adhesive-filled cylinder; and
c) allowing the molten hot melt adhesive filled cylinder to solidify.

The present invention is further directed to the non-blocking hot melt adhesive mass prepared by that process.

The method of the present invention is adaptable to the packaging of virtually any type of hot melt adhesive composition. It is especially adapted to the packaging of thermoplastic or thermosetting pressure sensitive adhesives where the handling problems are most severe. As examples the method disclosed herein may be used to package hot melt adhesives prepared from polymers and copolymers of synthetic resins, rubbers, polyethylene, polypropylene, polyurethane, acrylics, vinyl acetate, ethylene vinyl acetate and polyvinyl alcohol. More specific examples include hot melt adhesives prepared from the following:
a. rubber polymers such as block copolymers of monovinyl aromatic hydrocarbons and conjugated diene, e.g., styrene-butadiene, styrene-butadiene-styrene, styrene-isoprene-styrene, styrene-ethylene-butylene-styrene and styrene-ethylene propylene-styrene;
b. ethylene-vinyl acetate polymers, other ethylene esters and copolymers, e.g., ethylene methacrylate, ethylene n-butyl acrylate and ethylene acrylic acid;
c. polyolefins such as polyethylene and polypropylene;
d. polyvinyl acetate and random copolymers thereof;
e. polyacrylates;
f. polyamides;
g. polyesters;
h. polyvinyl alcohols and copolymers thereof;
i. polyurethanes;
j. polystyrenes;
k. polyepoxides;
l. graft copolymers of vinyl monomer(s) and polyalkylene oxide polymers; and
m. aldehyde containing resins such as phenol-aldehyde, urea-aldehyde, melamine-aldehyde and the like.

Most often such adhesives are formulated with tackifying resins in order to improve adhesion and introduce tack into the adhesive. Such resin include, among other materials, (a) natural and modified resins, (b) polyterpene resins, (c) phenolic modified hydrocarbon resins, (d) coumarone-indene resins, (e) aliphatic and aromatic petroleum hydrocarbon resins, (f) phthalate esters and (g) hydrogenated hydrocarbons, hydrogenated rosins and hydrogenated rosin esters.

Desirable optional ingredients include diluents, e.g. , liquid polybutene or polypropylene, petroleum waxes such as paraffin and microcrystalline waxes, polyethylene greases, hydrogenated animal, fish and vegetable fats, mineral oil and synthetic waxes as well as hydrocarbon oils such as naphthionic or paraffinic mineral oils.

Other optional additives may include stabilizers, antioxidants, colorants and fillers. The selection of components and amounts as well as the preparation thereof are well known in the art and described in the literature.

The thermoplastic film into which the molten adhesive is poured may be any film which is meltable together with the adhesive composition and blendable into said molten adhesive and which will not deleteriously affect the properties of the adhesive composition when blended therewith. Suitable thermoplastic materials include ethylene based polymers such as ethylene/vinyl acetate, ethylene acrylate, ethylene methacrylate, ethylene methyl acrylate, ethylene methyl methacrylate, high and low density polyethylene, polyethylene blends and chemically modified polyethylene, copolymers of ethylene and C 1-6 mono- or di-unsaturated monomers, polyamides, polybutadiene rubber, polyesters such as polyethylene terephthalate, polybutylene terephthalate, etc.; thermoplastic polycarbonates, atactic poly-alpha-olefins, including atactic polypropylene; thermoplastic polyacrylamides, polyacrylonitrile, copolymers of acrylonitrile and other monomers such as butadiene, styrene, etc., polymethyl pentent, polyphenylene sulfide, aromatic polyurethanes; styrene-acrylonitrile, acrylonitrile-butadiene-styrene, styrene-butadiene rubbers, polyethylene terephthalate, acrylonitrile-butadiene-styrene elastomers, polyphenylene sulfide as well as polyvinyl aromatic-rubber block copolymers.

The films may, if desired, contain antioxidants for enhanced stability as well as other optional components such as fatty amides or other processing aids, anti-stats, stabilizers, plasticizers, dyes, perfumes, fillers and the like.

The specific thermoplastic film utilized will depend, in large part, on the composition and melting point of the hot melt adhesive being packaged, with the softening point of the film generally being less than about 135°C. Particularly preferred for most hot melt adhesives are thermoplastic films of low density polyethylene or polyethylene vinyl acetate wherein the amount of vinyl acetate is 0 to 10%, preferably 3 to 5%, by weight. Especially preferred are such films having a melt flow index of 0.5 to 10.0; a softening point of 100°C to 120°C and a specific gravity of 0.88 to 0.96. One example of these films is available commercially from Armin Polyfilm under the Armin 501 trade name. For best results in reprocessing, it is preferred that the specific gravity of the packaging film be the same as or less than the specific gravity of the molten hot melt adhesive.

The thickness of the film utilized generally varies between about 0.00254 mm to 0.127 mm (0.1 mil to 5 mil), preferably 0.0127 to 0.1016 mm (0.5 mil to 4 mil). The thickness of the particular film also varies depending upon the temperature at which the molten adhesive is pumped or poured into the plastic film cylinder. The particular viscosity at which the adhesive can be introduced into the plastic film cylinder will vary depending on a variety of factors including the pumping capacity of the pump, the strength of then plastic film and the like. Viscosities in the range of 1,000 to 200,000 mPas (cps), preferably 2,000 to 100,000 mPas (cps) may be utilized. However, we have found that the most preferred viscosity of the adhesive which is to be packaged in accordance with the invention is between 10,000 and 50,000 mPas (cps). It will be recognized that the temperature at which an adhesive composition will exhibit this viscosity range will vary from one adhesive to another. In the case of adhesives which obtain their viscosity within the temperature range of 110 to 130°C, film thickness of about 0.03175 mm (1.25 mil) are preferred; while for adhesives which exhibit this viscosity at temperatures of 130 to 150°C, films of about 0.0381 mm (1.5 mil) are preferred.

It is further preferred that the thermoplastic film comprise not more than about 1.5% by weight of the total adhesive mass and that it optimally vary from 0.2 to 1.0% by weight of the mass in order to prevent undue dilution of the adhesive properties.

The heat sink which is critical to the success of the method of the present invention may comprise any means which will effectively and rapidly remove or absorb the excess heat from the entire surface of the film which is in contact with the molten hot melt adhesive composition so as to prevent the temperature of the film from exceeding its melting point even though the molten hot melt adhesive temperature is higher than the film melting temperature. Suitable heat sinks are provided by spraying the surface of the cylindrical plastic tube with cooled water or other refrigerant means such as chilled glycol, liquid or gaseous nitrogen, compressed carbon dioxide or the like. The spraying may be accomplished, for example, using a series of spray nozzles aimed at the mandrel or a water or cooling ring or series of rings may be positioned around the mandrel so as to provide a curtain or cascade of water or refrigerant around the entire circumference of the cylinder.

As discussed above, the molten adhesive is generally poured or pumped into the plastic film cylinder at a temperature at which the molten adhesive exhibits a viscosity of 1,000 to 200,000, preferably 10,000 to 50,000 mPas (cps). This temperature will generally vary from about 110° to about 150°C depending upon the particular adhesive. After filling, the adhesive cartridges, either individually or in a connected series, are further cooled to ambient temperature prior to bulk packaging. The latter cooling may be done by air or may be hastened by submerging the cartridge in chilled water or another refrigerant medium such as liquid or gaseous nitrogen, compressed carbon dioxide or the like.

Since the adhesive is pumped or poured continuously through the mandrel into the plastic film cylinder, it is possible to void and then cut the continuous filled tube into individual cartridges at virtually any desired length. In general, the individual cartridges are produced in a variety of sizes ranging from about 7.62 to 45.72 cm (three inches to 18 inches) in length and varying in weight, depending upon length, from about 0.225 to 2.25 kg (0.5 to five pounds).

The resultant individually packaged hot melt adhesive cartridges can be stored, handled and used without any problems of the individual blocks sticking together, adhering to other objects, or becoming contaminated even if exposed to increased pressure and/or temperature. When it is desired to ultimately utilize the adhesive, the entire wrapped cartridge is added to the melt pot. As an advantage of the present method, the fact that the adhesive is poured or pumped into the plastic film cylinder in its molten form creates some degree of fusion between the adhesive and the film. Because of this fusion, very little additional energy is required to melt and blend the film into the adhesive itself. Further, the absence of any entrapped air results in a homogeneous melting of the adhesive with no plastic film undesirably separating from the wrapped adhesive and floating to the surface and/or sides of the melting pot.

The thus packaged hot melt adhesive cartridge may, of course, additionally be packaged in a second outer container to further reduce its exposure to the environment, moisture or other contaminants. The secondary wrappings would then be removed by conventional procedures prior to utilization of the hot melt adhesive.

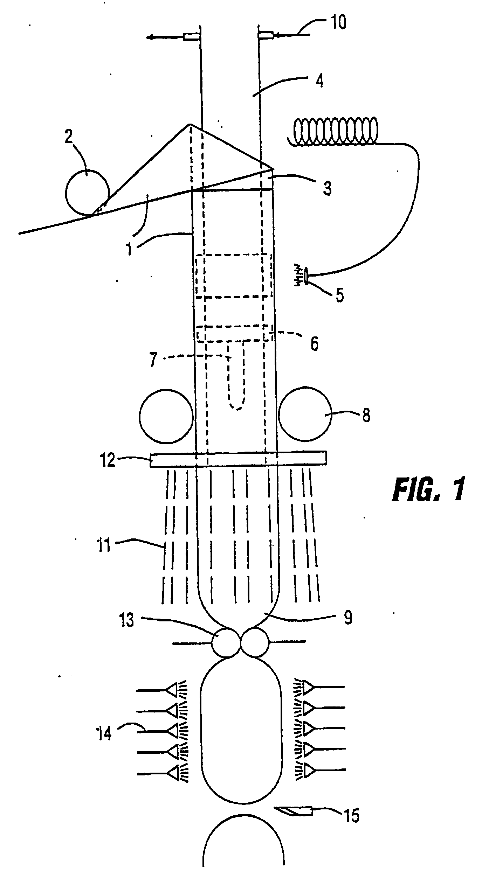

A preferred embodiment of the method of the invention described herein is illustrated in Figure 1. In the Figure, the plastic film (1) is passed through a series of idler rollers (2) which smoothes the film and controls the tension across the web. The film is then threaded into a film folder (3) which folds the film and forms a lap seal around a 2.54 to 10 cm (one to four inch) diameter fill pipe or mandrel (4). The lap seal is sealed with hot air (5), induction sealing or ultrasonic welding and then may be further sprayed with cooling air to set the seal.

After the seal has set, the tubular film is carried along the exterior of the fill pipe preferably using a series of spreader rings (6), film guide(s) (7) and drive wheels (8) until it reaches the end of the fill pipe, at which point the molten hot melt adhesive, pumped from a remote holding container through the mandrel enters the cylindrical plastic tube (9). If desired, in order to maintain the desired molten viscosity, the fill pipe may be insulated or jacketed as with double walls and filled with inlet and outlet ports (10) through which heated water, steam or mixtures thereof may be circulated, so as to prevent premature cooling of the molten adhesive in the mandrel and melting of the plastic film on the mandrel. The double wall construction also facilitates complete cleaning and purging of the mandrel after the filling operation is completed.

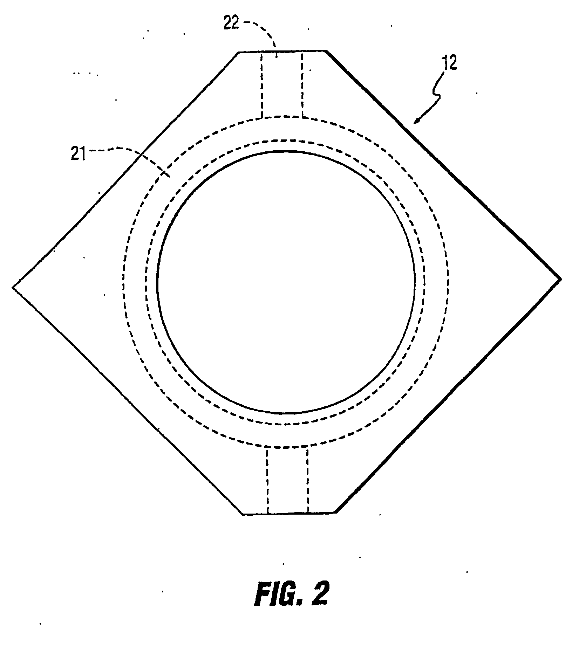

During filling, the tubular package is in contact with cooling water (11) or other refrigerant medium. This water contact may be accomplished using a series of water jets positioned around the circumference of the cylindrical tube. Alternatively, a water or cooling ring (12) or series of water or cooling rings may be positioned around the mandrel. In a preferred embodiment (illustrated in Fig. 2), a water ring (12) is positioned around the filling end of the mandrel and a channel (21) is cut into the entire interior circumference thereof. Water or other refrigerant enters the ring through at least one inlet (22), flowing through the opening at the inside edge of the channel (23) thereby forming a curtain coating or cascade of water around the entire outer surface of the plastic cylindrical tube. If desired, the inner channel may be baffled to allow for uniform distribution of the water. It will be recognized that while the term "spraying with coolant" is utilized herein, the invention also contemplates carrying out the entire filling operation in a cooled environment as in the presence of liquid nitrogen.

Subsequently, the adhesive filled tube is passed through voider rolls (13) which crimp or pinch the continuous filled cylinder into smaller cartridge sized segments and which are set so as to assure the proper cartridge length. Spraying with coolant is continued through additional spray nozzles (14) until the package is sufficiently cooled so that the packaged adhesive forms a self-seal formed at the voided portions. The cartridge packages may then be cut at the voided area using conventional means, e.g. mechanical scissor (15), laser cutter, water jet or a heated knife or wire and subsequently cooled to room temperature. Alternatively, the voided but uncut cartridge segments, still attached in serial form may be cooled and cut thereafter.

The cooling to room temperature may be accomplished entirely under ambient conditions, in a chilled air environment or may be hastened by submersion of the cartridges into a bath of cooled water, glycol, liquid nitrogen or the like.

### EXAMPLE

A conventional pressure sensitive hot melt adhesive composition suitable for disposable applications was prepared using a tackified and plasticized styrene-butadiene-styrene block copolymer.

A continuous supported cylindrical tube was formed by wrapping a plastic film comprising a 0.03048 mm (1.2 mil) low density polyethylene film around a 3.81 cm (1.5 inch) diameter insulated mandrel or fill pipe. After the lap seam was formed, it was sealed using hot air and then set by spraying with ambient temperature air.

The molten hot melt adhesive, at a viscosity of 20,000-30,000 mPas (cps.) (120-130°C) was pumped therein through a nozzle while the entire surface of the film was sprayed with chilled water (5-10°C). The filled tubes were voided at lengths of 15.24 cm (6 inches) and then cut to form individual cartridges. The resultant cartridges were allowed to cool in a chilled water bath until they had completely solidified and could be packaged in appropriate shipping containers.

The resultant cartridges had a film add-on content of about 0.25% and were characterized in that the plastic wrapping film was fused into the hot melt adhesive composition and, except for the area of the lap seam, could not be physically separated therefrom.

For testing purposes, the plastic film utilized in these cartridges was added to molten samples of the hot melt adhesive (175°C) at add-on levels of 0.25%. The samples were subjected to 24 hour stability testing and compared with the same size sample of the molten adhesive which did not contain any film. After 24 hours, 0.0608 mm (2 mil) coatings were made of the two products, the coatings were aged under constant temperature and humidity conditions overnight and tested for looptack and adhesion on high tensity polyethylene using the following procedures:

### Test Procedures

Adhesive Strength: The adhesion to stainless steel and to Mylar (polyester) film was measured by peeling the tape backing over itself 180°C at a constant speed (by a force applied to the free end of the tape) form high density polyethylene to which it has been applied by a fixed pressure. For the techniques used in conducting this test, see the 180°C peel adhesion test PSTC-1 of the Pressure Sensitive Tape Council. This test can be performed only on adhesive formulations which are pressure sensitive and is a measure of the strength or tenacity of the adhesive.

Loop Tack: Loop tack is measured by means of a loop tack tester (Testing machines, Inc., Amityville, NY). The latter records the force, measured in ounces, to remove a 2.54 to 12.70 cm (one-inch by five-inch) adhesive coated test strip, formed in the shape of a loop, from a polyethylene substrate having 2.54 sq. cm (one square inch) of contact. The results presented are the average of at least three tests.

**TABLE 1**

| Test | Control | Sample with Film |
|---|---|---|
| Adhesive Strength (aged) | 73.52 kg/m (4.1 lb/inch) | 67.87 kg/m (3.8 lb/inch) |
| Loop Tack (aged) | 0.21 kg/cm² (47.3 oz/in²) | 0.19 kg/cm² (42.7 oz/in²) |

Similar results were obtained when a styrene-ethylene-butylene-styrene based pressure sensitive hot melt adhesive was thus packaged in a plastic film comprising polyethylene and an ethylene vinyl acetate copolymer containing 4% vinyl acetate (Armin 501 available from Armin Polyfilm and having a melt temperature 110°C). These adhesives cartridges were evaluated for use as a positioning adhesive at 0.25% and 0.50% film add-on levels using conventional industry tests. No detrimental effects were observed by the incorporation of the melted plastics film wrapping into the molten hot melt adhesive composition.

A pressure sensitive adhesive containing a blend of styrene-butadiene-styrene and styrene-ethylene-butylene-styrene block copolymers and adapted for labelling applications was packaged at a viscosity range of 20,000-30,000 mPas (cps) as described above using a plastic film comprising polyethylene and an ethylene vinyl acetate copolymer containing 4% vinyl acetate (Armin 501 available from Armin Polyfilm and having a melt temperature 110°C). For testing purposes, the plastic film coated adhesive cartridges were added to a melt pot, remelted at 150°C and tested for adhesion using oriented polypropylene (OPP) and polyethylene terephthalate (PET) substrates. The samples were also tested for stability. The results of the testing are shown in Table 2.

**TABLE 2**

| | Film Wrapped Adhesive | Control |
|---|---|---|
| Viscosity 132°C | 1210 | 1125 |
| Ball & Ring Softening Point | 68°C | 68°C |
| OPP/PET Bonds @ RT | 2 @ 100% Polytear | 2 @ 100% Polytear |
| @ 4°C | 1 @ 90% Polytear | 1 @ 90% Polytear |
| | 1 @ 60% Polytear | 1 @ 70% Polytear |
| Stability Viscosity @ | 635 | 460 |
| 120°C | No skin, gel, char., edge | No skin, gel, char., edge |
| After 72 hours @ 177°C | ring or vols. | ring or vols. |

As the results of Table 2 show, the film wrapped cartridges had performance qualities similar to those observed with uncoated adhesive. Thus, there were no detrimental effects observed by the introduction of the plastic film into the molten adhesive.

The results of the above tests show that the adhesive properties of the adhesive blocks are unaffected by the admixture with the packaging material. Similar results would also be obtained when packaging other hot melt adhesive formulations.

## Claims

1. A method for the continuous packaging of hot melt adhesive compositions comprising the steps of:
a. continuously pumping or pouring molten hot melt adhesive in liquid form into a cylindrical plastic tube of plastic film, the cylindrical tube being in direct contact with cooled water or a cooled liquid or gaseous environment, the adhesive being poured or pumped at a temperature at or above the melting point of the plastic film and the plastic film being meltable together with the adhesive composition and blendable into said molten adhesive without deleteriously affecting the properties of the adhesive;
b. sealing the molten hot melt adhesive filled cylinder; and
c. allowing the molten hot melt adhesive filled cylinder to solidify.

2. The method of Claim 1 wherein the molten hot melt adhesive is poured or pumped into the cylindrical plastic tube at a molten viscosity of 1,000 mPas (cps). to 200,000 mPas (cps).

3. The method of Claim 1 wherein the molten hot melt adhesive is poured or pumped into the cylindrical plastic tube at a molten viscosity of 2,000 mPas (cps). to 100,000 mPas (cps).

4. The method of Claim 1 wherein the molten hot melt adhesive is poured or pumped into the cylindrical plastic tube at a molten viscosity of 10,000 mPas (cps). to 50,000 mPas (cps).

5. The method of Claim 4 wherein the molten hot melt adhesive is poured or pumped into the cylindrical plastic tube at a molten viscosity of 20,000 mPas (cps). to 30,000 mPas (cps).

6. The method of Claim 1 wherein the cylindrical plastic tube is formed by wrapping the plastic film around a mandrel and forming a seal at the overlap of the film, and wherein the molten hot melt adhesive is pumped through the mandrel into the cylindrical plastic tube at the bottom end of the mandrel.

7. The method of Claim 6 wherein the mandrel is double walled and adapted with inlet and outlet ports to allow heated water, steam or a mixture thereof to be circulated therethrough.

8. The method of Claim 6 wherein the mandrel has a diameter of one to four inches.

9. The method of Claim 1 wherein the hot melt adhesive is a pressure sensitive hot melt adhesive.

10. The method of Claim 1 wherein the plastic film is selected from the group consisting of ethylene based polymers, polyamides, polybutadiene rubber, polyesters, polycarbonates, atactic poly-alpha-olefins, thermoplastic polyacrylamides, polyacrylonitrile and copolymers thereof, polymethyl pentene, polyphenylene sulfide, aromatic polyurethanes, styrene-acrylonitrile, acrylonitrile-butadiene-styrene, styrene-butadiene rubbers, polyethylene terephthalate, polyphenylene sulfide and polyvinyl aromatic-rubber block copolymers.

11. The method of Claim 1 wherein the plastic film is a low density polyethylene or a polyethylene vinyl acetate polymer containing up to 10% by weight vinyl acetate.

12. The method of Claim 1 wherein the plastic film is present in an amount of 0.2 to 1.0% by weight of the adhesive mass.

13. The method of Claim 1 wherein the specific gravity of the plastic film is the same as or less than that of the molten hot melt adhesive.

14. The method of Claim 1 wherein the molten adhesive is poured into the plastic film cylinder at a temperature of 110-130°C and wherein the thickness of the plastic film is 0.03175 mm (1.25 mil).

15. The method of Claim 1 wherein the molten adhesive is poured into the plastic film cylinder at a temperature of 130 to 150°C and wherein the thickness of the plastic film is 0.03175 mm (1.5 mil).

16. The method of Claim 1 wherein the hot melt adhesive is prepared from a rubbery block copolymer.

17. A non-blocking hot melt adhesive mass prepared by a continuous method which comprises the steps of:
a. continuously pumping or pouring molten hot melt adhesive in liquid form into a cylindrical plastic tube of plastic film, the film having a thickness of 0.00254 to 0.127 mm (0.1 to 5 mil), and being meltable together with the adhesive composition and blendable into said molten adhesive without deleteriously affecting the properties of the adhesive, the cylindrical tube being in direct contact with cooled water or a cooled liquid or gaseous environment, the adhesive being poured or pumped at a temperature at or above the melting point of the plastic film;
b. sealing the molten hot melt adhesive filled cylinder; and
c. allowing the molten hot melt adhesive filled cylinder to solidify.

18. The method of Claim 1 wherein the hot melt adhesive filled cylinder is sealed by passing through voider rolls.

19. The hot melt adhesive mass of Claim 17 wherein the hot melt adhesive filled cylinder is sealed by passing through voider rolls.

## Patentansprüche

1. Verfahren zum kontinuierlichen Abpacken von Schmelzklebstoffzusammensetzungen, das die folgenden Schritte umfaßt:
a) kontinuierliches Pumpen oder Gießen von geschmolzenem Schmelzklebstoff in flüssiger Form in ein zylindrisches Kunststoffrohr aus Kunststoffolie, wobei das zylindrische Rohr in direktem Kontakt mit gekühltem Wasser oder einer gekühlten flüssigen oder gasförmigen Umgebung steht, wobei der Klebstoff bei einer Temperatur gegossen oder gepumpt wird, die am Schmelzpunkt der Kunststoffolie oder oberhalb desselben liegt, und wobei die Kunststoffolie zusammen mit der Klebstoffzusammensetzung schmelzbar und in den geschmolzenen Klebstoff mischbar ist, ohne die Eigenschaften des Klebstoffes nachteilig zu beeinflussen;
b) Verschweißen des mit geschmolzenem Schmelzklebstoff gefüllten Zylinders; und
c) Erstarrenlassen des mit geschmolzenem Schmelzklebstoff gefüllten Zylinders.

2. Verfahren nach Anspruch 1, bei dem der geschmolzene Schmelzklebstoff bei einer Viskosität der Schmelze von 1.000 mPas (cps) bis 200.000 mPas (cps) in das zylindrische Kunststoffrohr gegossen oder gepumpt wird.

3. Verfahren nach Anspruch 1, bei dem der geschmolzene Schmelzklebstoff bei einer Viskosität der Schmelze von 2.000 mPas (cps) bis 100.000 mPas (cps) in das zylindrische Kunststoffrohr gegossen oder gepumpt wird.

4. Verfahren nach Anspruch 1, bei dem der geschmolzene Schmelzklebstoff bei einer Viskosität der Schmelze von 10.000 mPas (cps) bis 50.000 mPas (cps) in das zylindrische Kunststoffrohr gegossen oder gepumpt wird.

5. Verfahren nach Anspruch 1, bei dem der geschmolzene Schmelzklebstoff bei einer Viskosität der Schmelze von 20.000 mPas (cps) bis 30.000 mPas (cps) in das zylindrische Kunststoffrohr gegossen oder gepumpt wird.

6. Verfahren nach Anspruch 1, bei dem das zylindrische Kunststoffrohr dadurch ausgebildet wird, daß man die Kunststoffolie um einen Kern wickelt und eine Schweißnaht an der Überlappungsstelle der Folie ausbildet, und bei dem der geschmolzene Schmelzklebstoff durch den Kern in das zylindrische Kunststoffrohr am unteren Ende des Kerns gepumpt wird.

7. Verfahren nach Anspruch 6, bei dem der Kern doppelwandig ist und mit Einlaß- und Auslaßöffnungen versehen ist, um das Hindurchzirkulieren von erwärmtem Wasser, Dampf oder einer Mischung davon zu ermöglichen.

8. Verfahren nach Anspruch 6, bei dem der Kern einen Durchmesser von 1 bis 4 Inch aufweist.

9. Verfahren nach Anspruch 1, bei dem der Schmelzklebstoff ein Haftschmelzklebstoff ist.

10. Verfahren nach Anspruch 1, bei dem die Kunststoffolie ausgewählt ist aus der Gruppe, bestehend aus Polymeren auf Ethylenbasis, Polyamiden, Polybutadienkautschuk, Polyestern, Polycarbonaten, ataktischen Poly-alpha-Olefinen, thermoplastischen Polyacrylamiden, Polyacrylnitril und Copolymeren davon, Polymethylpenten, Polyphenylensulfid, aromatischen Polyurethanen, Styrol-Acrylnitril-, Acrylnitril-Butadien-Styrol-, Styrol-Butadien-Kautschuken, Polyethylenterphthalat, aromatischen Polyphenylensulfid- und Polyvinyl-Kautschukblockcopolymeren ausgewählt ist.

11. Verfahren nach Anspruch 1, bei dem die Kunststoffolie ein Polyethylen niedriger Dichte oder ein Polyethylen/Vinylacetat-Polymer ist, das bis zu 10 Gew.-% Vinylacetat enthält.

12. Verfahren nach Anspruch 1, bei dem die Kunststoffolie in einer Menge von 0,2 bis 1,0 Gew.-%, bezogen auf die Klebstoffmasse, vorliegt.

13. Verfahren nach Anspruch 1, bei dem die Dichte der Kunststoffolie gleich derjenigen oder geringer als diejenige des geschmolzenen Schmelzklebstoffes ist.

14. Verfahren nach Anspruch 1, bei dem der geschmolzene Klebstoff bei einer Temperatur von 110 bis 130°C in den Kunststoffolien-Zylinder gegossen wird und bei dem die Dicke der Kunststoffolie 0.03175 mm (1,25 Mil) beträgt.

15. Verfahren nach Anspruch 1, bei dem der geschmolzene Klebstoff bei einer Temperatur von 130 bis 150°C in den Kunststoffolien-Zylinder gegossen wird und bei dem die Dicke der Kunststoffolie 0.0381 mm (1,5 Mil) beträgt.

16. Verfahren nach Anspruch 1, bei dem der Schmelzklebstoff aus einem Kautschukblockcopolymer hergestellt ist.

17. Nicht-blockende Schmelzklebstoffmasse, hergestellt nach einem kontinuierlichen Verfahren, das die folgenden Schritte umfaßt:
a) kontinuierliches Pumpen oder Gießen von geschmolzenem Schmelzklebstoff in ein zylindrisches Kunststoffrohr aus Kunststoffolie, wobei die Folie eine Dicke von 0.00254 bis 0.127 mm (0.1 bis 5 Mil) aufweist und zusammen mit der Klebstoffzusammensetzung schmelzbar und in den geschmolzenen Klebstoff mischbar ist, ohne die Eigenschaften des Klebstoffes nachteilig zu beeinflussen, wobei das zylindrische Rohr in direktem Kontakt mit gekühlten Wasser oder einer gekühlten flüssigen oder gasförmigen Umgebung steht, wobei der Klebstoff bei einer Temperatur gegossen oder gepumpt wird, die am Schmelzpunkt der Kunststoffolie oder oberhalb desselben liegt;
b) Verschweißen des mit geschmolzenem Schmelzklebstoff gefüllten Zylinders, und
c) Erstarrenlassen des mit geschmolzenem Schmelzklebstoff gefüllten Zylinders.

18. Verfahren nach Anspruch 1, bei dem der mit Schmelzklebstoff gefüllte Zylinder durch Hindurchleiten durch Entleerungswalzen verschweißt wird.

19. Schmelzklebstoffmasse nach Anspruch 17, bei der der mit Schmelzklebstoff gefüllte Zylinder durch Hindurchleiten durch Entleerungswalzen verschweißt wird.

## Revendications

1. Procédé pour emballer de manière continue des compositions d'adhésifs thermofusibles, comprenant les étapes consistant :
a. à pomper ou verser de manière continue un adhésif thermofusible fondu, à l'état liquide, dans un tube cylindrique en matière plastique constitué d'un film de matière plastique, le tube cylindrique étant en contact direct avec de l'eau refroidie ou un environnement liquide ou gazeux refroidi, l'adhésif étant versé ou pompé à une température égale ou supérieure au point de fusion du film de matière plastique, et le film de matière plastique pouvant fondre conjointement avec la composition d'adhésif et pouvant être mélangé audit adhésif fondu sans effet néfaste sur les propriétés de l'adhésif ;
b. à boucher hermétiquement le cylindre rempli d'adhésif thermofusible fondu ; et
c. à laisser se solidifier le cylindre rempli d'adhésif thermofusible fondu.

2. Procédé suivant la revendication 1, dans lequel l'adhésif thermofusible fondu est versé ou pompé dans le tube cylindrique en matière plastique à une viscosité en masse fondue de 1000 mPa.s (cps) à 200 000 mPa.s (cps).

3. Procédé suivant la revendication 1, dans lequel l'adhésif thermofusible fondu est versé ou pompé dans le tube cylindrique en matière plastique à une viscosité en masse fondue de 2000 mPa.s (cps) à 100 000 mPa.s (cps).

4. Procédé suivant la revendication 1, dans lequel l'adhésif thermofusible fondu est versé ou pompé dans le tube cylindrique en matière plastique à une viscosité en masse fondue de 10 000 mPa.s (cps) à 50 000 mPa.s (cps).

5. Procédé suivant la revendication 4, dans lequel l'adhésif thermofusible fondu est versé ou pompé dans le tube cylindrique en matière plastique à une viscosité en masse fondue de 20 000 mPa.s (cps) à 30 000 mPa.s (cps).

6. Procédé suivant la revendication 1, dans lequel le tube cylindrique en matière plastique est formé en appliquant le film de matière plastique autour d'un mandrin et en formant une jonction étanche au niveau de la zone de chevauchement du film, et dans lequel l'adhésif thermofusible fondu est pompé à travers le mandrin dans le tube cylindrique en matière plastique à l'extrémité inférieure du mandrin.

7. Procédé suivant la revendication 6, dans lequel le mandrin est à paroi double et est muni d'orifices d'admission et de sortie pour permettre la circulation à travers ce mandrin d'eau chauffée, de vapeur d'eau et d'un de leurs mélanges.

8. Procédé suivant la revendication 6, dans lequel le mandrin a un diamètre d'un à quatre inches.

9. Procédé suivant la revendication 1, dans lequel l'adhésif thermofusible est un adhésif thermofusible sensible à la pression.

10. Procédé suivant la revendication 1, dans lequel le film de matière plastique est choisi dans le groupe consistant en polymères à base d'éthylène, polyamides, caoutchouc polybutadiène, polyesters, polycarbonates, polyalpha-oléfines atactiques, polyacrylamides thermoplastiques, polyacrylonitrile et ses copolymères, polyméthylpentène, polymère de sulfure de phénylène, polyuréthannes aromatiques, polymères styrène-acrylonitrile, polymères acrylonitrile-butadiène-styrène, caoutchoucs styrène-butadiène, polymères de téréphtalate d'éthylène et copolymères séquencés de polymères de sulfure de phénylène et de caoutchouc polyvinylique aromatique.

11. Procédé suivant la revendication 1, dans lequel le film de matière plastique est constitué d'un polyéthylène basse densité ou d'un polymère polyéthylène-acétate de vinyle contenant jusqu'à 10 % en poids d'acétate de vinyle.

12. Procédé suivant la revendication 1, dans lequel le film de matière plastique est présent en une quantité de 0,2 à 1,0 % en poids de la masse d'adhésif.

13. Procédé suivant la revendication 1, dans lequel la densité du film de matière plastique est égale ou inférieure à celle de l'adhésif thermofusible fondu.

14. Procédé suivant la revendication 1, dans lequel l'adhésif fondu est versé dans le cylindre constitué par le film de matière plastique à une température de 110 à 130°C, et dans lequel l'épaisseur du film de matière plastique est égale à 0,03175 mm (1,25 mil).

15. Procédé suivant la revendication 1, dans lequel l'adhésif fondu est versé dans le cylindre constitué du film de matière plastique à une température de 130 à 150°C, et dans lequel l'épaisseur du film de matière plastique est égale à 0,3175 mm (1,5 mil).

16. Procédé suivant la revendication 1, dans lequel l'adhésif thermofusible est préparé à partir d'un copolymère séquencé caoutchouteux.

17. Masse d'adhésif thermofusible non apte au blocage préparée par un procédé continu, qui comprend les étapes consistant :
a. à pomper ou verser de manière continue l'adhésif thermofusible fondu, à l'état liquide, dans un tube cylindrique en matière plastique constitué d'un film de matière plastique, film qui a une épaisseur de 0,00264 à 0,127 mm (0,1 à 5 mils), qui est apte à la fusion conjointement avec la composition d'adhésif et qui peut être mélangé à l'adhésif fondu sans effet néfaste sur les propriétés de l'adhésif, le tube cylindrique étant en contact direct avec de l'eau refroidie ou un environnement liquide ou gazeux refroidi, l'adhésif étant versé ou pompé à une température égale ou supérieure au point de fusion du film de matière plastique ;
b. à boucher hermétiquement le cylindre rempli d'adhésif thermofusible fondu ; et
c. à laisser se solidifier le cylindre rempli d'adhésif thermofusible fondu.

18. Procédé suivant la revendication 1, dans lequel le cylindre rempli d'adhésif thermofusible est bouché hermétiquement en le faisant passer entre des rouleaux d'évacuation.

19. Masse d'adhésif thermofusible suivant la revendication 17, dans laquelle le cylindre rempli d'adhésif thermofusible est obturé hermétiquement par passage entre des rouleaux d'évacuation.
